# EUROPEAN PATENT SPECIFICATION

(11) **EP 2 518 845 B1**
(45) Date of publication and mention of the grant of the patent: **20.11.2013**
(21) Application number: 11163803.7
(22) Date of filing: 27.04.2011
(51) Int. Cl.: H02G 3/04, H02G 3/06, E06C 1/10

(54) **A splice plate for coupling two adjacent ends of two cable ladder units and a cable ladder arrangement**
Spleißplatte zum Koppeln von zwei aneinanderliegenden Enden von zwei Kabelleitereinheiten und Kabelleiteranordnung
Éclisse pour le couplage de deux extrémités adjacentes de deux unités d'échelle de câble et agencement d'échelle de câble

(43) Date of publication of application: 31.10.2012
(73) Proprietor: MP Bolagen Industri AB, 574 21 Vetlanda (SE)
(72) Inventor: Birath, Ulf, 574 36, Vetlanda (SE)
(74) Representative: Willquist, Sofia Ellinor

(56) References cited:
- GB-A- 2 114 820
- US-A- 6 000 187
- US-A1- 2010 086 348

## Description

### Technical field of the invention

The invention relates to splice plates for cable ladder arrangements and cable ladder arrangement comprising a splice plate.

### Technology Background

Historically, electrical wiring was installed in electrical conduits, i.e. electrical piping systems. The electrical wiring was pulled through the piping system and thereby routed between the desired positions in the system. Since electrical wiring in industrial and commercial settings is often subject to change, the cable management was time-consuming and difficult due to the fact that new cables had to be pulled through the piping systems.

State of the art cable management systems comprise cable ladder arrangements instead of electrical conduits. Thereby, new cables can be added through simply laying the cables in the ladders, thus resources can be saved through time-efficient installations. The cable ladder arrangements usually comprise several cable ladder units of varying lengths and types, e.g. straight, corners and 4-way crossing cable ladder units. The desired cable ladder units are coupled with splice plates into a cable ladder arrangement. State of the art splice plates, e.g. as shown in US2010086348, generally comprise holes corresponding to holes in the cable ladder units, in which holes bolts and nuts are arranged to couple the ladder units or by screws as in GB 2114820.

However, state of the art cable ladder arrangements have weak spots in the couplings between cable ladder units, sometimes even resulting in deformation and thereby electrical security hazards. Thus, there is a need for a splice plate for cable ladder arrangements that provides improved strength in the coupling between cable ladder units.

### Summary of the invention

An object of the invention is to achieve a splice plate that provides improved strength in the couplings in cable ladder arrangements.

The invention is based on the inventor's realization that by providing a splice plate that engages a cross beam of each of the two cable ladder units that are to be coupled, the coupling's strength is improved significantly. Thereby, forces in the cable arrangement coupling that are caused by gravity can be partly taken up by the cross beam, instead of by the primary beams.

According to a first aspect of the invention, above and other objects are achieved through a splice plate for coupling two adjacent ends of two cable ladder units to each other, wherein the splice plate extends substantially along a first longitudinal axis, the splice plate has a first recess for receiving a cross beam of a first of the two cable ladder units, and a second recess for receiving a cross beam of a second of the two cable ladder units, so that the splice plate impede any movement non-parallel to the first axis between the two cable ladder units when the splice plate has received the cross beams in each of its corresponding first and second recess.

In the context of the application "splice plate" should be understood as any plate suitable for coupling two cable ladder units together to form a part of the cable ladder arrangement, thus such the splice plate can e.g. have various forms and consist of various material. Furthermore, a "cable ladder unit" should be understood as any unit in the cable ladder arrangement, e.g. a straight, corner or 4-way crossing for carrying cables. Such cable ladder unit can have two primary beams and a cross beam connecting the two beams. Moreover, in the context of the application "a recess" should be understood as a space where the material in the splice plate has been removed constituting an aperture, thus, the form and size of the recess can vary widely and still fall under the definition. Finally, in the context of the application "movements non-parallel to the first axis" should be understood as any movements in the lateral axis and/or vertical axis, including e.g. rotational movements.

A splice plate according to above enables the splice plate to receive forces, caused by e.g. gravitation, and transfer such forces not only to the primary beams of the two connected cable ladder units, but also to cross beams of the cable ladder units. Thereby, the arrangement becomes strong and the splice plates, with support from the received cross beams, impede the two cable ladders from deflecting.

Thus, the coupling of two cable ladder units can be significantly stronger than in arrangements not utilizing the cross beams. Furthermore, the solution is practical since generally all cable ladder units have cross beams, thereby existing means can be utilized, which is very cost efficient and convenient for a user.

Furthermore, since the existing cross beams can be used to strengthen the coupling, very little material is needed, which means a cost saving. It is even so that a coupling with a recess according to above require less material than the same coupling without the recess at the same time as the strength of the coupling is significantly increased.

According to one embodiment of the inventive concept the first recess is located at a first end along the first longitudinal axis of the splice plate, and the second recess is located at a second end along the first longitudinal axis, opposite the first end.

Thereby the recesses in the splice plate can easily receive the cross beams by bringing the splice plate towards the two cable ladder units along the first axis. Thus, by having the recesses located at two opposing ends along the first longitudinal axis, the installation is facilitated which saves time and thereby installation cost.

According to another embodiment of the inventive concept the recesses are formed so that the splice plate bears against at least a top portion of the cross beams.

Thereby, forces, in a substantially vertical axis, actuating on the cable ladder arrangement can be spread to the cross beam and thereby strengthen the coupling and prevent the cable ladder coupling from deflecting. This is a great advantage, since deflections caused by forces in a substantially vertical axis are the most common deflections in cable ladder arrangements.

According to yet another embodiment of the inventive concept, the recesses are formed so that the splice plate bear against at least a bottom portion of the cross beams.

Thereby, forces, in the substantially vertical axis, actuating on the cable ladder arrangement can be spread to the cross beam and thereby strengthen the coupling and prevent the cable ladder coupling from deflecting. This is a great advantage, since deflections caused by forces in the substantially vertical axis are the most common deflections in cable ladder arrangements.

According to yet another embodiment of the present inventive concept, the recesses are formed so that the splice plate bears against at least an inner side portion of the cross beams.

In the context of this application *"an inner side portion of the cross beams"* should be understood as a side of the cross beams facing each other, i.e. also facing the adjacent ends that are to be coupled.

Thereby, the splice plate installation is facilitated since it enables an installer to know at what position the splice plate should be arranged along the first longitudinal axis, thus saving time in the installation. Furthermore, the splice plate according to above-mentioned embodiment will impede the cable ladder units to move in at lease one direction along the longitudinal axis.

According to yet another embodiment of the inventive concept, wherein the splice plate delimits the recess by a first longitudinal portion arranged to bear against a top portion of the cross beam, a vertical portion forming an inner portion of the recess and a second longitudinal portion arranged to bear against a bottom portion of the cross beam, wherein the first longitudinal portion has a longer extension than the second longitudinal portion.

Such splice plate can transfer forces generated from two coupled cable ladder units being affected by gravity or agitation, to cross beams of the two cable ladder units. In the most common situation, the cable ladder units are mounted along the longitudinal axis, thus the embodiment as described above with a longer first longitudinal portion adapted to bear against the top portion of the cross beam will be beneficial to receive forces directed downwardly in the vertical axis. Furthermore, the transferring of forces can be achieved with less material than if the lower horizontal portion would extend as long as the upper horizontal portion.

According to yet another embodiment of the inventive concept, the splice plate has a cross-sectional shape so that the splice plate can mesh with the two adjacent ends of two cable ladder units.

Thereby, in one embodiment the splice plate can be inserted into the primary beams of the cable ladder units. In another embodiment the splice plate can be slipped onto the primary beam of the cable ladder units.

In the embodiments according to above, it is possible to arrange the splice plate to the cable ladder units without any additional fastening means to fasten the splice plate in the vertical axis and the lateral axis.

Thereby, the cable ladder coupling procedure is facilitated, since it enables an installer to know at what position in the lateral axis and the vertical axis the splice plate should be installed, thereby saving time in installation.

Moreover, a splice plate that meshes with the adjacent ends of the cable ladder units provides increased stability to the coupling.

According to another embodiment of the invention according to the inventive concept the splice plate further comprises a first lock protrusion arranged to mesh with an aperture in a first of the two cable ladder units, wherein the first lock protrusion is arranged to impede the first recess from disengaging the first cross beam when the splice plate is installed.

According to yet another embodiment of the invention according to inventive concept the splice plate further comprises a second lock protrusion arranged to mesh with an aperture in a second of the two cable ladder units, wherein the second lock protrusion is arranged to impede the second recess from disengaging the second cross beam when the splice plate is installed.

Thereby, the splice plate is secured in a position so that it bears against the cross beam and thereby provides a stronger coupling.

Furthermore, in one embodiment, when the splice plate meshes with the cable ladder units and comprise the lock protrusions, no additional fastening means are needed to couple two cable ladder units together. Instead, the splice plate can simply be pushed onto or into the cable ladder units until the recesses receive the cross beams and the lock protrusions mesh with the apertures in the cable ladder units. Thereby all movements between the two cable ladder units are impeded. The lock-protrusions will impede any movements along the first longitudinal axis. The meshing between the splice plate and the cable ladder units will impede movements along the second lateral axis and along the third vertical axis. The coupling between the recess and the cross beam will impede movements in the third vertical axis and movements in at least one direction along the first longitudinal axis. Thereby any movements, including rotational movements, are impeded by the coupling.

Thereby, the installation is facilitated considerably since no alignment of the splice plate is needed and moreover, no additional fastening means are needed, such as screws, bolts and nuts, glue, welding, sprints or equivalent.

According to a second aspect of the present invention, above and other objects are achieved through a cable ladder arrangement extending substantially along a first longitudinal axis, comprising a splice plate and two cable ladder units, wherein each cable ladder unit comprises two primary beams aligned in parallel to the first axis and to each other, and at least one cross beam extending substantially along a second axis which couples the two primary beams to each other, wherein the splice plate has a first recess for receiving a cross beam of a first of the two cable ladder units and a second recess for receiving a cross beam of a second of the two cable ladder units, so that the splice plate impede movements, non-parallel to the first axis, between the two cable ladder units when the recesses have received the cross beams.

The effects and features of this second aspect of the invention are largely analogous to those described above in connection with the first aspect of the invention.

An cable ladder arrangement according to above enables the splice plate in the coupling to receive forces, caused by e.g. gravitation or agitation, and transfer such forces not only to the primary beams of the two connected cable ladder units, but also to cross beams of the cable ladder units. Thereby, the whole arrangement including the coupling becomes strong and the splice plates, with support from the received cross beams, impede the two cable ladders from deflecting.

Thus, the coupling of two cable ladder units can be significantly stronger than in arrangements not utilizing the cross beams. Furthermore, the solution is practical since existing beams can be utilized, which is very cost efficient and convenient for a user.

Furthermore, since the existing cross beams is used to strengthen the coupling, limited material is needed, which brings a cost saving. It is even so that the coupling with the recess according to above requires less material than a coupling without the recess at the same time as the strength of the coupling is significantly increased.

In one embodiment of the inventive concept the first recess is located at an end along the first axis of the splice plate, and the second recess is located at a second end, opposing the first end, along the first axis.

Thereby the recesses in the splice plate can easily receive the cross beams by bringing the splice plate towards the two cable ladder units respectively other along the first longitudinal axis. Thus, by having the recesses located at two opposing ends along the first axis, the installation is facilitated which saves time and thereby installation cost.

In another embodiment of the inventive concept the recesses are formed so that the splice plate bears against at least a top portion of the cross beams.

In yet another embodiment of the inventive concept the recesses are formed so that the splice plate bears against at least a bottom portion of the cross beams.

Thereby, forces, in a substantially vertical axis, actuating on the cable ladder arrangement can be spread to the cross beam and thereby strengthen the coupling and prevent the cable ladder coupling from deflecting. This is a great advantage, since deflections caused by forces in the substantially vertical axis are the most common deflections in cable ladder arrangements.

According to yet another embodiment of the inventive concept the splice plate has a cross-sectional shape so that the splice plate can mesh with the two adjacent ends of two cable ladder units.

Thereby, in one embodiment the splice plate can be inserted into the primary beams of the cable ladder units. In another embodiment the splice plate can be slipped onto the primary beam of the cable ladder units.

In the embodiments according to above, it is possible to arrange the splice plate to the cable ladder units without any additional fastening means to fasten the splice plate in the vertical axis and the lateral axis.

Thereby, the cable ladder coupling procedure is facilitated, since it enables an installer to know at what position in the lateral axis and the vertical axis the splice plate should be installed, thereby saving time in installation.

Moreover, a splice plate that meshes with the adjacent ends of the cable ladder units provides increased stability to the coupling.

In yet another embodiment of the inventive concept the splice plate further comprises a first lock protrusion arranged to mesh with an aperture in a primary beam of a first of the two cable ladder units, wherein the first lock protrusion is arranged to impede the first recess from disengaging the first cross beam when the splice plate is installed.

In yet another embodiment of the inventive concept the splice plate further comprises a second lock protrusion arranged to mesh with an aperture in a primary beam of a second of the two cable ladder units, wherein the second lock protrusion is arranged to impede the second recess from disengaging the second cross beam when the splice plate is installed.

Thereby, the splice plate is secured in a position so that it bears against the cross beam and thereby provides a stronger coupling.

Furthermore, in one embodiment, when the splice plate meshes with the cable ladder units and comprise the lock protrusions, no additional fastening means are needed to couple two cable ladder units together. Instead, the splice plate can simply be pushed onto or into the cable ladder units until the recesses receive the cross beams and the lock protrusions mesh with the apertures in the cable ladder units.

Thereby all movements between the two cable ladder units are impeded. The lock-protrusions will impede any movements along the first longitudinal axis. The meshing between the splice plate and the cable ladder units will impede movements along the second lateral axis and along the third vertical axis. The coupling between the recess and the cross beam will impede movements in the third vertical axis and movements in at least one direction along the first longitudinal axis. Thereby any movements, including rotational movements, are impeded by the coupling.

Thereby, the installation is facilitated considerably since no alignment of the splice plate is needed and moreover, no addition fastening means are needed, such as screws, bolts and nuts, glue, welding, sprints or equivalent.

### Brief description of drawings

Above mentioned and other aspects of the inventive concept will now be discussed in detail from the support of drawings, wherein
fig. 1a schematically illustrates a perspective view of the splice plate;
fig. 1b schematically illustrates a front view of the splice plate;
fig. 1c schematically illustrates a side view of the splice plate;
fig. 2 schematically illustrates a perspective view of two cable ladder units and the splice plate;
fig. 3 schematically illustrates a perspective view of two cable ladder units coupled with the splice plate and close-up of a lock-protrusion; and
fig. 4 schematically illustrates how the splice plate is inserted into two cable ladder units to engage two cross beams.

### Detailed description

In the following description, a splice plate and a cable ladder arrangement is described. In the embodiments below, the splice plate is formed to mesh with the interior of primary beams of two cable ladder units. It should be noted that this by no means should limit the scope of the present inventive concept, which is equally applicable on splice plates that e.g. mesh with the outside of the primary beams or do not mesh with any parts of the cable ladder units.

Moreover, certain terminology is used herein for convenience only, and should not limit the scope of the present inventive concept. Furthermore, some reoccurring details are only marked with reference figures once per figure for clarity reasons.

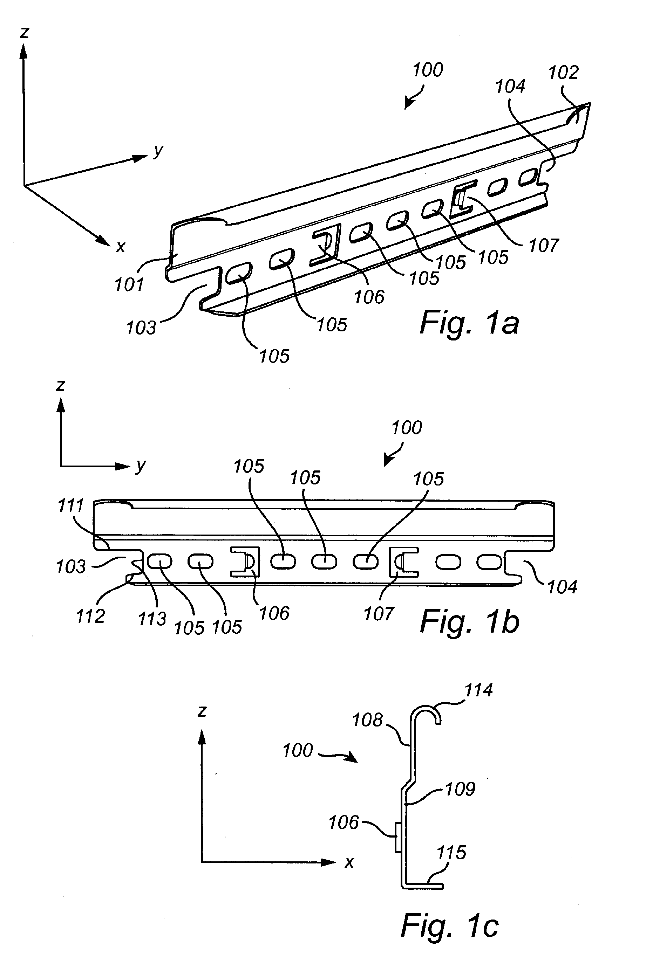

In fig.1a, the splice plate 100 is illustrated in a perspective view. The splice plate 100 extends substantially in a direction along a longitudinal axis y. The splice plate also has a vertical height along the vertical axis z, perpendicular to the longitudinal axis y. The splice plate 100 in the embodiment according to fig a has a first end 101 located at a first side of the splice plate along the longitudinal axis y, and a second end 102 located at a second side of the splice plate 100 along the longitudinal axis y, opposite the first side. The first end 101 comprises a recess 103, adapted to receive a cross beam of a cable ladder unit. The second end 102 also comprises a recess 104, which also is adapted to receive a cross beam of a cable ladder unit. The two recesses 103 and 104 allow the splice plate 100 to form a rigid coupling between two cable ladder units.

Furthermore, the splice plate 100 illustrated in fig. 1a comprises apertures 105 in the zy-plane of the longitudinal axis y and the vertical axis z, and are distributed along the longitudinal axis y. The apertures 105 are suitable for mounting accessories onto the cable ladder arrangement. The apertures can be used for any accessories such as e.g. outlets or similar, that can be attached with bolts and nuts through the apertures 105.

Furthermore, the splice plate 100 illustrated in fig. 1a comprises a first lock protrusion 106 arranged to mesh with an aperture in the cable ladder unit. The first lock protrusion 106 is arranged to impede the first recess 103 from disengaging the first cross beam when the splice plate 100 has been installed. Moreover, the splice plate 100 comprises a second lock protrusion 107 arranged to mesh with an aperture in another cable ladder unit. The lock protrusion 107 is arranged to impede the second recess 104 from disengaging the second cross beam when the splice plate has been installed. In the embodiment illustrated in fig. 1a, the recesses 103, 104, lock protrusions 106, 107 and apertures 105 are all positioned along the longitudinal axis y and their centre points are all aligned at the same vertical height.

In fig.1b the splice plate is illustrated in a front view where the splice plate is illustrated in the zy-plane of vertical axis z and longitudinal axis y. As described above, the splice plate comprises two recesses 103, 104, several apertures 105 for mounting accessories, and two lock protrusions 106, 107. Furthermore, the splice plate comprises three portions facing each of the two recesses 103, 104. A first portion 111 is adapted to bear against the top portion of a cross beam of the cable ladder unit. A second portion 112 is adapted to bear against the bottom portion of a cross beam of the cable ladder unit. A third portion 113 is adapted to bear against an inner side portion of a cross beam of the cable ladder unit. The three portions 111, 112, 113, separately and together, strengthens the coupling of two cable ladder units, as forces acting upon the coupling can be partly transferred to the cross beams in the arrangement. Thereby, a strong cable ladder coupling is achieved.

In the embodiment illustrated in fig. 1b, the splice plate 100 delimits the recess 103 by an first longitudinal portion 111 arranged to bear against the top portion of said cross beam 203, the vertical portion 113 forming an inner portion of the recess 103 and the second longitudinal portion 112 arranged to bear against the bottom portion of the cross beam 203, wherein the first longitudinal portion 111 has a longer extension than the second longitudinal portion 112.

In one embodiment, the first longitudinal portion 111 can have a longitudinal length of between 20mm and 50mm, and the second longitudinal portion 112 can have a longitudinal length of between 5mm and 20mm. In another embodiment the vertical portion 113 can have a vertical height of between 5mm and 35mm.

Furthermore, in one embodiment, if a straight line is drawn between the point where the first longitudinal portion 111 meets the first end 101 and the point where the second longitudinal portion 112 meets the outer end of the splice plate 100, the angle between said straight line and the first longitudinal portion is between 30° and 50°.

Moreover, the corner where the first longitudinal portion 11 meets the first end 101 can be rounded to facilitate that the cross beam can be received as described above. Correspondingly, the corner where the second longitudinal portion 112 meets the outer end of the splice plate 100 can be rounded to obtain the same effect as mentioned above.

In fig. 1c the splice plate is illustrated in a side view, where the splice plate is illustrated in the zx-plane of the vertical axis z and the lateral axis x. The splice plate 100 has an inner side, facing the other primary beam, i.e. the primary beam that the splice plate does not mesh with, and an outer side facing away from said primary beam. The cross-sectional shape of the splice plate as illustrated in fig. 1c is adjusted to mesh with the primary beams of cable ladder units. Furthermore, the lock protrusion 106 is shown at the outer side of the splice plate. The lock protrusion 106 is displaced along the lateral axis x, in an outwardly direction.

In the embodiment shown in fig. 1a, the vertical top portion 114 of the splice plate 100 has a curved cross-section forming a semicircular arc extending in the zx-plane towards the inner side of the splice plate. Moreover, the vertical bottom portion has a flange 115 extending along the second lateral axis x, also this extending towards the inner side of the splice plate.

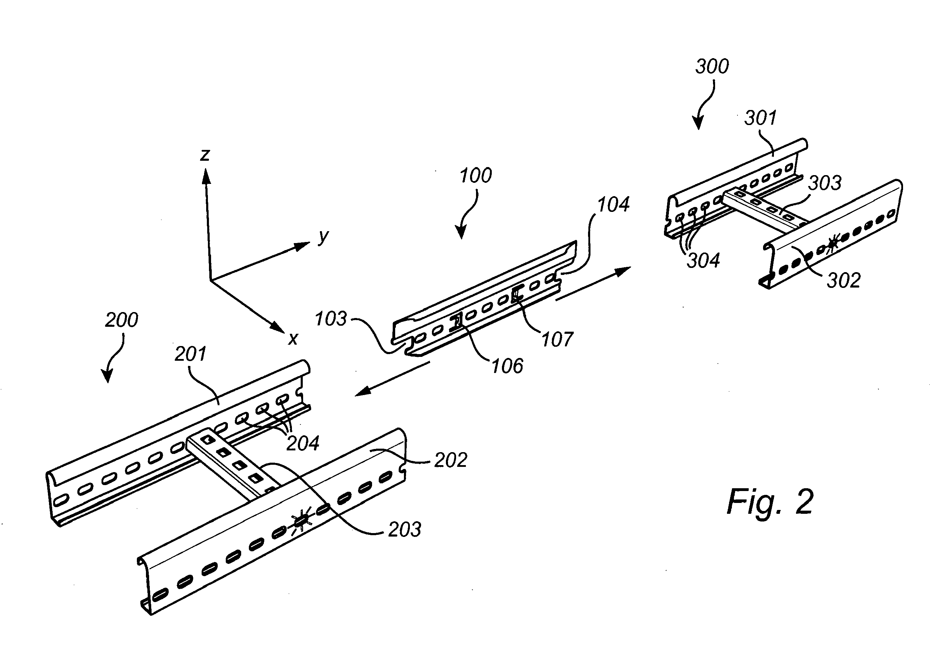

As shown in fig. 2-4, the primary beams of the cable ladder unit 200 can have corresponding, but slightly larger, cross-sectional shape, with an semicircular arc at the top portion and the flange extending along the lateral axis x. Thereby, the splice plate 100 can be inserted into the primary beam 201 so that the splice plate mesh with the primary beam.

Through having a cross-sectional shape that meshes with the primary beams of the cable ladder unit, the splice plate illustrated in fig. 1c can couple two cable ladder units without any additional fixing means. Instead, the cross-sectional shape holds the splice plate in place along the vertical axis z and the lateral axis x. Furthermore, the lock protrusions 106, 107, keep the splice plate in a position so that the recesses 103, 104 engage two cross beams. Thereby, a strong coupling without any fastening means like bolts and nuts can be achieved.

In fig. 2 the splice plate 100 and two cable ladder units 200, 300 are illustrated in a perspective view. The cable ladder units 200, 300 each have a first primary beam 201, 301 and a second primary beam 202, 302. Between the first primary beams 201, 301 and the second primary beams 202, 302, cross beams 203,303 are arranged, connecting the first primary beam to the second primary beam. In the embodiment illustrated in fig. 2 each of the cable ladder units 200, 300 is short, straight units, meanwhile the inventive concept is equally applicable on other cable ladder units, such as longer units, bent units or branched units.

A splice plate 100 is placed between the first cable ladder unit 200 and the second cable ladder unit 300, so that if the splice plate 100 is moved along the longitudinal axis y, towards the first cable ladder unit 200, the splice plate 100 will mesh with the first primary beam 201 of the first cable ladder unit 200. Furthermore, if the splice plate 100 is moved along the longitudinal axis y, towards the second cable ladder unit 300, the splice plate 100 will mesh with the first primary beam 301 of the second cable ladder unit 300.

If the splice plate 100 is moved far enough along the longitudinal axis y towards the first cable ladder unit 200, the recess 103 will engage with the cross beam 203 of the first cable ladder unit 200. If the splice plate 100 is moved far enough along the longitudinal axis y towards the second cable ladder unit 300, the recess 104 will engage with the cross beam 303 of the second cable ladder unit 300.

Moreover, the cable ladder units 200, 300 have apertures 204, 304 in their primary beams 201, 202, 301, 302. The apertures 204, 304 in the cable ladder units correspond to the apertures 105 in the splice plate 100.

Furthermore, if the splice plate 100 is moved along the longitudinal axis y inside the first primary beam 201 of the first cable ladder unit 200 towards the cross beam 203, the lock protrusion 106 will engage in one of the apertures 204 in the first primary beam 201 of the first cable ladder unit 200. Moreover, if the splice plate 100 is moved along the longitudinal axis y inside the first primary beam 301 of the second cable ladder unit 300 towards the cross beam 303, the lock protrusion 107 will engage in one of the apertures 304 in the first primary beam 301 of the second cable ladder unit 300.

The apertures 204, 304 located in both the first and the second cable ladder units 200, 300 can further be used to e.g. install accessories or attach any unit to the cable ladder arrangement.

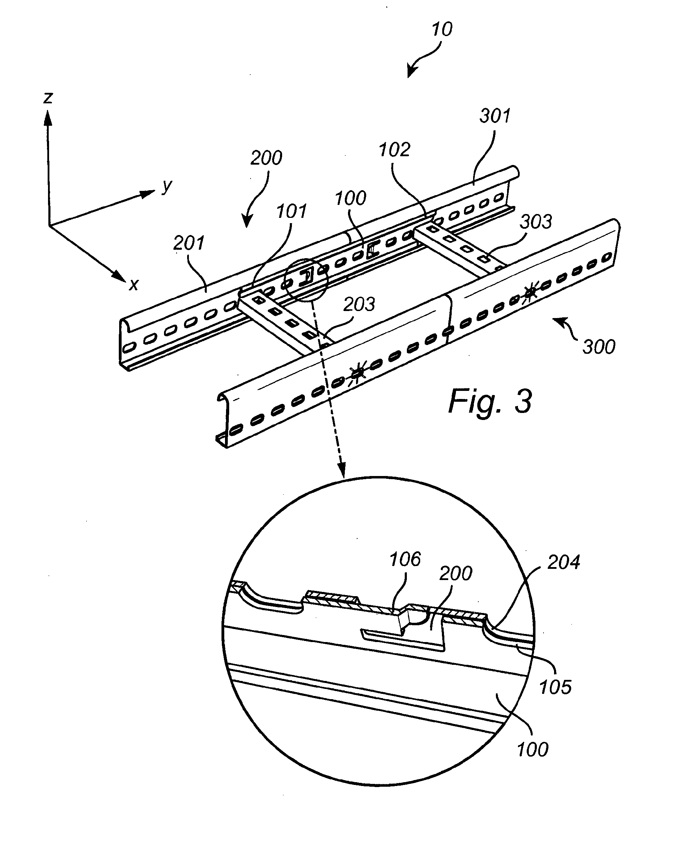

Fig. 3 illustrates the cable ladder arrangement when the splice plate 100 is installed as a coupling between the first cable ladder unit 200 and the second cable ladder unit 300. The splice plate's first end 101 is inserted in the first primary beam 201 of the first cable ladder unit 200, and the splice plate's second end 102 is inserted in the first primary beam 301 of the second cable ladder unit 300. The first recess 103, as shown in fig. 1a-1b, engages the cross beam 203 of the first cable ladder unit 200, and the second recess 104, as shown in fig. 1a-1b, engages the cross beam 303 of the second cable ladder unit 300.

Furthermore, fig. 3 shows a close-up of how the first lock protrusion 106 in splice plate 100 mesh with one of the apertures 204 in the first cable ladder unit 200. As the close-up shows, the lock protrusion 106 is displaced along the lateral axis x, in an outwardly direction. The displacement enables the lock-protrusion 106 to engage the portion of the first cable ladder unit that is surrounding the aperture 204 which is aligned with the lock protrusion 106. Thereby, the lock protrusion 106 impedes the splice plate 100 to move from the position where the splice plate engages the cross beam 203 of the first cable ladder unit. In the embodiment shown in fig. 3, a mirror-inverted, but otherwise identical, configuration is arranged to impede the splice plate 100 from moving from the position where the splice plate engages the cross beam 303 of the second cable ladder unit 300.

Furthermore, the close-up shows that the several apertures 105 of the splice plate 100 are aligned with the apertures 204 of the first cable ladder unit 200. Thereby, accessories can still be mounted in the portions of the cable ladder arrangement where the splice plate is 100 located inside the cable ladder unit.

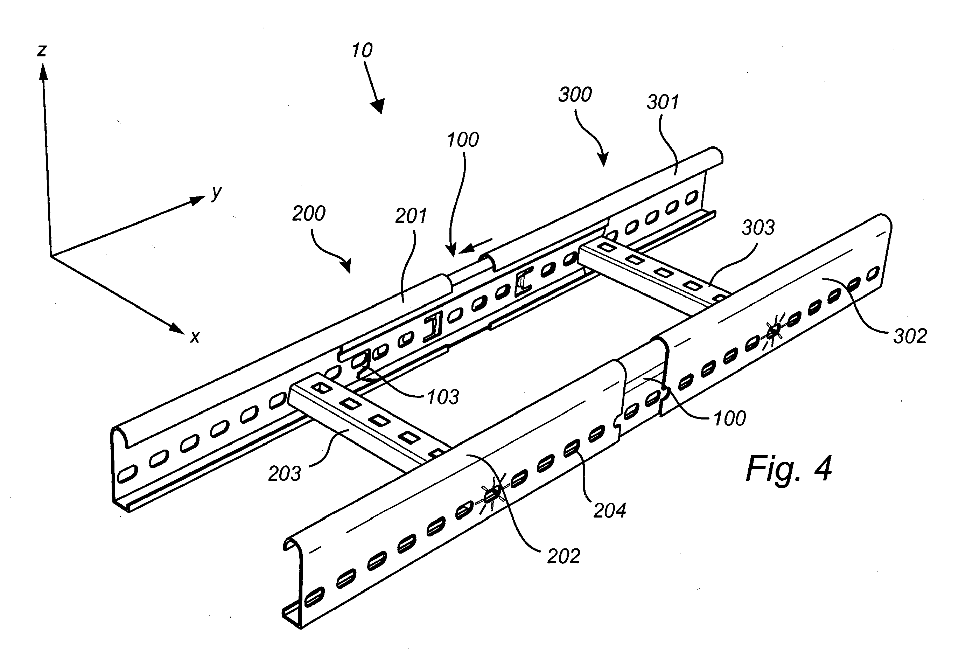

In fig. 4 a cable ladder arrangement 10 with the first cable ladder unit 200, the second cable ladder unit 300 and two splice plates 100 is illustrated. The splice plate inserted in the two second primary beams 202, 302 is partly hidden by said second primary beams but has corresponding features as the splice plate 100 that is inserted in two first primary beams 201, 301.

The two cable ladder units 200, 300 are in process of being coupled with the splice plates 100. The splice plates 100 are inserted in the second cable ladder unit 300 so that the recesses 104 of the splice plates 100 have engaged the cross beam 303 of the second cable ladder unit 300 and so that the lock protrusions 107 of the splice plates 100 hold the splice plates in position relatively the second cable ladder unit 300.

However, as shown in fig 4 by an arrow along the longitudinal axis y, the splice plates 100 needs to be inserted further into the primary beams 201, 202 of the first cable ladder unit 200. Thereby the recesses 103 will engage the cross beam 203. Furthermore, the lock-protrusions 106 of each splice plate will engage one of the apertures 204 in the first primary beam 201 and in the second primary beam 202, respectively.

A person skilled in the art realizes that the present invention by no means is limited to the embodiments described above. For example, the inventive concept is equally applicable on splice plates, and cable ladder arrangements with splice plates, which are fastened with bolt and nuts to primary beams, but still has a recess to transfer forces to a cross beam. Moreover, the inventive concept is applicable on splice plates where the recesses are not located in two opposing end along a longitudinal first axis.

## Claims

1. A splice plate (100) for coupling two adjacent ends of two cable ladder units (200, 300) to each other, wherein the splice plate extends substantially along a first longitudinal axis (y), **characterized in that** said splice plate (100) has a first recess (103) for receiving a cross beam (203) of a first (200) of said two cable ladder units, and a second recess (104) for receiving a cross beam (303) of a second (300) of said two cable ladder units, so that said splice plate (100) impede any movements non-parallel to said first axis (y) between the two cable ladder units when said splice plate has received said cross beams in each of its corresponding first and second recess.

2. A splice plate (100) according to claim 1, wherein said first recess (103) is located at a first end (101) along the first axis (y) of said splice plate, and said second recess (104) is located at a second end (102) along the first axis (y), opposite said first end.

3. A splice plate (100) according to claim 2, wherein said recesses (103, 104) are formed so that said splice plate bears against at least a top portion of said cross beams (203, 303).

4. A splice plate (100) according to claim 3, wherein said recesses (103, 104) are formed so that said splice plate bear against at least a bottom portion of said cross beams (203, 303).

5. A splice plate according to claim 3 or 4, wherein said recesses (103, 104) are formed so that said splice plate bear against at least an inner side portion of said cross beams (203, 303).

6. A splice plate (100) according to any one of claims 2-5 wherein the splice plate delimits the recess (103) by a first longitudinal portion (111) arranged to bear against a top portion of said cross beam (203), a vertical portion (113) forming an inner portion of the recess and a second longitudinal portion (112) arranged to bear against a bottom portion of said cross beam, wherein the first longitudinal portion has a longer extension than the second longitudinal portion.

7. A splice plate (100) according to any one of the preceding claims,
wherein said splice plate has a cross-sectional shape so that said splice plate can mesh with said two adjacent ends of two cable ladder units (200, 300).

8. A splice plate (100) according to any one of preceding claims, wherein said splice plate further comprises a first lock protrusion (106) arranged to mesh with an aperture (204) in a first (200) of said two cable ladder units, wherein said first lock protrusion is arranged to impede said first recess (103) from disengaging said first cross beam (203) when said splice plate is installed.

9. A splice plate (100) according to claim 8, wherein said splice plate further comprises a second lock protrusion (107) arranged to mesh with an aperture (304) in a second (300) of said two cable ladder units, wherein said second lock protrusion is arranged to impede said second recess (104) from disengaging said second cross beam (303) when said splice plate is installed.

10. A cable ladder arrangement (10) extending substantially along a first axis (y), comprising:
a splice plate (100); and
two cable ladder units (200, 300), wherein each cable ladder unit comprises two primary beams (201, 202) aligned in parallel to said first axis (y) and to each other, and at least one cross beam (203) extending substantially along a second axis (x) which couples said two primary beams to each other,
**characterized in that**
said splice plate (100) has a first recess (103) for receiving a cross beam (203) of a first (200) of said two cable ladder units and a second recess (104) for receiving a cross beam (303) of a second (300) of said two cable ladder units, so that said splice plate (100) impedes movements non-parallel to said first axis (y) between the two cable ladder units (200, 300) when said recesses (103, 104) have received said cross beams (203, 303).

11. A cable ladder arrangement (10) according to claim 10, wherein said first recess (103) is located at an end (101) along the first axis (y) of said splice plate (100), and said second recess (104) is located at a second end (102), opposing said first end, along the first axis (y).

12. A cable ladder arrangement (10) according to claims 10 or 11, wherein said recesses (103, 104) are formed so that said splice plate (100) bears against at least a top portion of said cross beams (203, 303).

13. A cable ladder arrangement (10) according to any one of claims 10-12, wherein said recesses (103, 104) are formed so that said splice plate (100) bears against at least a bottom portion of said cross beams (203, 303).

14. A cable ladder arrangement (10) according to any one of claims 10-13, wherein said splice plate (100) has a cross-sectional shape so that said splice plate can mesh with said two adjacent ends of two cable ladder units (200, 300).

15. A cable ladder arrangement (10) according to any one of claims 10-14, wherein said splice plate (100) further comprises a first lock protrusion (106) arranged to mesh with an aperture (204) in a primary beam (201) of a first (200) of said two cable ladder units, wherein said first lock protrusion (206) is arranged to impede said first recess (103) from disengaging said first cross beam (203) when said splice plate is installed, said splice plate (100) further comprises a second lock protrusion (107) arranged to mesh with an aperture (304) in a primary beam (301) of a second (300) of said two cable ladder units, wherein said second lock protrusion (107) is arranged to impede said second recess (104) from disengaging said second cross beam (303) when said splice plate is installed.

## Patentansprüche

1. Spleißplatte (100) zum Aneinanderkoppeln von zwei aneinanderliegenden Enden von zwei Kabelleitereinheiten (200, 300), wobei die Spleißplatte im Wesentlichen entlang einer ersten Längsachse (y) verläuft, **dadurch gekennzeichnet, dass** die Spleißplatte (100) eine erste Aussparung (103) zum Aufnehmen eines ersten Querträgers (203) einer ersten (200) der zwei Kabelleitereinheiten und eine zweite Aussparung (104) zum Aufnehmen eines Querträgers (303) einer zweiten (300) der zwei Kabelleitereinheiten aufweist, sodass die Spleißplatte (100) jegliche Bewegungen, die nicht parallel zur ersten Achse (y) sind, zwischen den zwei Kabelleitereinheiten verhindert, wenn die Spleißplatte die Querträger in jeder ihrer entsprechenden ersten und zweiten Aussparung aufgenommen hat.

2. Spleißplatte (100) nach Anspruch 1, wobei sich die erste Aussparung (103) an einem ersten Ende (101) entlang der ersten Achse (y) der Spleißplatte befindet und sich die zweite Aussparung (104) an einem zweiten Ende (102) entlang der ersten Achse (y) gegenüber dem ersten Ende befindet.

3. Spleißplatte (100) nach Anspruch 2, wobei die Aussparungen (103, 104) derart ausgebildet sind, dass die Spleißplatte gegen zumindest einen oberen Abschnitt der Querträger (203, 303) drückt.

4. Spleißplatte (100) nach Anspruch 3, wobei die Aussparungen (103, 104) derart ausgebildet sind, dass die Spleißplatte gegen zumindest einen unteren Abschnitt der Querträger (203, 303) drückt.

5. Spleißplatte (100) nach einem der Ansprüche 3 oder 4, wobei die Aussparungen (103, 104) derart ausgebildet sind, dass die Spleißplatte gegen zumindest einen Innenseitenabschnitt der Querträger (203, 303) drückt.

6. Spleißplatte (100) nach einem der Ansprüche 2 bis 5, wobei die Spleißplatte die Aussparung (103) durch einen ersten Längsabschnitt (111), der zum Drücken gegen einen oberen Abschnitt des Querträgers (203) angeordnet ist, einen vertikalen Abschnitt (113), der einen Innenabschnitt der Aussparung ausbildet, und einen zweiten Längsabschnitt (112) begrenzt ist, der zum Drücken gegen einen unteren Abschnitt des Querträgers angeordnet ist, wobei der erste Längsabschnitt eine größere Ausdehnung als der zweite Längsabschnitt aufweist.

7. Spleißplatte (100) nach einem der vorhergehenden Ansprüche, wobei die Spleißplatte eine derartige Querschnittform aufweist, dass die Spleißplatte in zwei aneinanderliegende Enden von zwei Kabelleitereinheiten (200, 300) einrücken kann.

8. Spleißplatte (100) nach einem der vorhergehenden Ansprüche, wobei die Spleißplatte ferner einen ersten Sperrvorsprung (106) umfasst, der zum Einrücken in eine Öffnung (204) in einer ersten (200) der zwei Kabelleitereinheiten angeordnet ist, wobei der erste Sperrvorsprung zum Verhindern angeordnet ist, dass die erste Aussparung (103) den ersten Querträger (203) freigibt, wenn die Spleißplatte eingerichtet ist.

9. Spleißplatte (100) nach Anspruch 8, wobei die Spleißplatte ferner einen zweiten Sperrvorsprung (107) umfasst, der zum Einrücken in eine Öffnung (304) in einer zweiten (300) der zwei Kabelleitereinheiten angeordnet ist, wobei der zweite Sperrvorsprung zum Verhindern angeordnet ist, dass die zweite Aussparung (104) den zweiten Querträger (303) freigibt, wenn die Spleißplatte eingerichtet ist.

10. Kabelleiteranordnung (10), die im Wesentlichen entlang einer ersten Achse (y) verläuft, umfassend:
eine Spleißplatte (100); und
zwei Kabelleitereinheiten (200, 300), wobei jede Kabelleitereinheit zwei primäre Träger (201, 202), die parallel zur ersten Achse (y) und zueinander ausgerichtet sind, und zumindest einen Querträger (203) umfasst, der im Wesentlichen entlang einer zweiten Achse (x) verläuft und die zwei primären Träger aneinanderkoppelt,
**dadurch gekennzeichnet, dass**
die Spleißplatte (100) eine erste Aussparung (103) zum Aufnehmen eines ersten Querträgers (203) einer ersten (200) der zwei Kabelleitereinheiten und eine zweite Aussparung (104) zum Aufnehmen eines Querträgers (303) einer zweiten (300) der zwei Kabelleitereinheiten aufweist, sodass die Spleißplatte (100) Bewegungen, die nicht parallel zur ersten Achse (y) sind, zwischen den zwei Kabelleitereinheiten (200, 300) verhindert, wenn die Aussparungen (103, 104) die Querträger (203, 303) aufgenommen haben.

11. Kabelleiteranordnung (10) nach Anspruch 10, wobei sich die erste Aussparung (103) an einem ersten Ende (101) entlang der ersten Achse (y) der Spleißplatte befindet und sich die zweite Aussparung (104) an einem zweiten Ende (102) entlang der ersten Achse (y) gegenüber dem ersten Ende befindet.

12. Kabelleiteranordnung (10) nach einem der Ansprüche 10 oder 11, wobei die Aussparungen (103, 104) derart ausgebildet sind, dass die Spleißplatte (100) gegen zumindest einen oberen Abschnitt der Querträger (203, 303) drückt.

13. Kabelleiteranordnung (10) nach einem der Ansprüche 10 bis 12, wobei die Aussparungen (103, 104) derart ausgebildet sind, dass die Spleißplatte (100) gegen zumindest einen unteren Abschnitt der Querträger (203, 303) drückt.

14. Kabelleiteranordnung (10) nach einem der Ansprüche 10 bis 13, wobei die Spleißplatte (100) eine derartige Querschnittform aufweist, dass die Spleißplatte in zwei aneinanderliegenden Enden von zwei Kabelleitereinheiten (200, 300) einrücken kann.

15. Kabelleiteranordnung (10) nach einem der Ansprüche 10 bis 14, wobei die Spleißplatte (100) ferner einen ersten Sperrvorsprung (106) umfasst, der zum Einrücken in eine Öffnung (204) in einem primären Träger (201) einer ersten (200) der zwei Kabelleitereinheiten angeordnet ist, wobei der erste Sperrvorsprung (206) zum Verhindern angeordnet ist, dass die erste Aussparung (103) den ersten Querträger (203) freigibt, wenn die Spleißplatte eingerichtet ist, wobei die Spleißplatte (100) ferner einen zweiten Sperrvorsprung (107) umfasst, der zum Einrücken in eine Öffnung (304) in einem primären Träger (301) in einer zweiten (300) der zwei Kabelleitereinheiten angeordnet ist, wobei der zweite Sperrvorsprung (107) zum Verhindern angeordnet ist, dass die zweite Aussparung (104) den zweiten Querträger (303) freigibt, wenn die Spleißplatte eingerichtet ist.

## Revendications

1. Éclisse (100) pour l'accouplement de deux extrémités adjacentes de deux unités d'échelle à câbles (200, 300) l'une avec l'autre, dans laquelle l'éclisse s'étend substantiellement le long d'un premier axe longitudinal (y), **caractérisée en ce que** ladite éclisse (100) possède une première cavité (103) destinée à recevoir une traverse (203) d'une première (200) desdites deux unités d'échelle à câbles, et une deuxième cavité (104) destinée à recevoir une traverse (303) d'une deuxième (300) desdites deux unités d'échelle à câbles, de manière à ce que ladite éclisse (100) empêche tout mouvement non-parallèle audit premier axe (y) entre les deux unités d'échelle à câbles une fois que ladite éclisse a reçu lesdites traverses dans chacune de ses première et deuxième cavités correspondantes.

2. Éclisse (100) selon la revendication 1, dans laquelle ladite première cavité (103) se trouve à une première extrémité (101) le long du premier axe (y) de ladite éclisse, et ladite deuxième cavité (104) se trouve à une deuxième extrémité (102) le long du premier axe (y), à l'opposé de ladite première extrémité.

3. Éclisse (100) selon la revendication 2, dans laquelle lesdites cavités (103, 104) sont formées de manière à ce que ladite éclisse s'appuie contre au moins une partie supérieure desdites traverses (203, 303).

4. Éclisse (100) selon la revendication 3, dans laquelle lesdites cavités (103, 104) sont formées de manière à ce que ladite éclisse s'appuie contre au moins une partie inférieure desdites traverses (203, 303).

5. Éclisse (100) selon la revendication 3 ou 4, dans laquelle lesdites cavités (103, 104) sont formées de manière à ce que ladite éclisse s'appuie contre au moins une partie latérale intérieure desdites traverses (203, 303).

6. Éclisse (100) selon l'une quelconque des revendications 2 à 5, dans laquelle l'éclisse délimite la cavité (103) par une première partie longitudinale (111) agencée pour s'appuyer contre une partie supérieure de ladite traverse (203), une partie verticale (113) formant une partie intérieure de la cavité et une deuxième partie longitudinale (112) agencée pour s'appuyer contre une partie inférieure de ladite traverse, dans laquelle la première partie longitudinale comporte une extension plus longue que la deuxième partie longitudinale.

7. Éclisse (100) selon l'une quelconque des revendications précédentes, dans laquelle ladite éclisse présente une forme de section transversale permettant à l'éclisse d'engrener avec lesdites deux extrémités adjacentes de deux unités d'échelle à câbles (200, 300).

8. Éclisse (100) selon l'une quelconque des revendications précédentes, dans laquelle ladite éclisse comprend en outre une première saillie de verrouillage (106) agencée pour s'engager dans une ouverture (204) dans une première (200) desdites deux unités d'échelle à câbles, dans laquelle ladite première saillie de verrouillage est agencée de manière à empêcher ladite première cavité (103) de se désengager de ladite première traverse (203) lorsque ladite éclisse est installée.

9. Éclisse (100) selon la revendication 8, dans laquelle ladite éclisse comprend en outre une deuxième saillie de verrouillage (107) agencée de manière à engrener avec une ouverture (304) dans une deuxième (300) desdites deux unités d'échelle à câbles, dans laquelle ladite deuxième saillie de verrouillage est agencée de manière à empêcher ladite deuxième cavité (104) de se désengager de ladite deuxième traverse (303) lorsque ladite éclisse est installée.

10. Arrangement d'échelle à câbles (10) s'étendant substantiellement le long d'un premier axe (y), comprenant :
une éclisse (100) ; et
deux unités d'échelle à câbles (200, 300), dans lequel chaque unité d'échelle à câbles comprend deux poutres primaires (201, 202) alignées en parallèle par rapport au premier axe (y) et l'une par rapport à l'autre, et au moins une traverse (203) s'étendant substantiellement le long d'un deuxième axe (x) accouplant lesdites deux poutres primaires l'une avec l'autre,
**caractérisé en ce que**
ladite éclisse (100) possède une première cavité (103) destinée à recevoir une traverse (203) d'une première (200) desdites deux unités d'échelle à câbles, et une deuxième cavité (104) destinée à recevoir une traverse (303) d'une deuxième (300) desdites deux unités d'échelle à câbles, de manière à ce que ladite éclisse (100) empêche les mouvements non-parallèles audit premier axe (y) entre les deux unités d'échelle à câbles (200, 300) une fois que lesdites cavités (103, 104) ont reçu lesdites traverses (203, 303).

11. Arrangement d'échelle à câbles (10) selon la revendication 10, dans lequel ladite première cavité (103) se trouve à une extrémité (101) le long du premier axe (y) de ladite éclisse (100), et ladite deuxième cavité (104) se trouve à une deuxième extrémité (102) le long du premier axe (y), à l'opposé de ladite première extrémité.

12. Arrangement d'échelle à câbles (10) selon la revendication 10 ou 11, dans lequel lesdites cavités (103, 104) sont formées de manière à ce que ladite éclisse (100) s'appuie contre au moins une partie supérieure desdites traverses (203, 303).

13. Arrangement d'échelle à câbles (10) selon l'une quelconque des revendications 10 à 12, dans lequel lesdites cavités (103, 104) sont formées de manière à ce que ladite éclisse (100) s'appuie contre au moins une partie inférieure desdites traverses (203, 303).

14. Arrangement d'échelle à câbles (10) selon l'une quelconque des revendications 10 à 13, dans lequel ladite éclisse (100) présente une forme de section transversale permettant à l'éclisse d'engrener avec lesdites deux extrémités adjacentes de deux unités d'échelle à câbles (200, 300).

15. Arrangement d'échelle à câbles (10) selon l'une quelconque des revendications 10 à 14, dans lequel ladite éclisse (100) comprend en outre une première saillie de verrouillage (106) agencée pour s'engager dans une ouverture (204) dans une poutre primaire (201) d'une première (200) desdites deux unités d'échelle à câbles, dans lequel ladite première saillie de verrouillage (206) est agencée de manière à empêcher ladite première cavité (103) de se désengager de ladite première traverse (203) lorsque ladite éclisse est installée, ladite éclisse (100) comprenant en outre une deuxième saillie de verrouillage (107) agencée de manière à s'engager dans une ouverture (304) dans une poutre primaire (301) d'une deuxième (300) desdites deux unités d'échelle à câbles, dans lequel ladite deuxième saillie de verrouillage (107) est agencée de manière à empêcher ladite deuxième cavité (104) de se désengager de ladite deuxième traverse (303) lorsque ladite éclisse est installée.
